# EUROPÄISCHE PATENTANMELDUNG

(11) **EP 1 342 528 A1**
(43) Veröffentlichungstag der Anmeldung: **10.09.2003**
(21) Anmeldenummer: 03000843.7
(22) Anmeldetag: 15.01.2003
(51) Int. Cl.: B23K 9/04, D21D 5/24

(54) **Verfahren zur Erhöhung der Verschleissfestigkeit von Gehäuseteilen von zur Aufbereitung von Altpapier bestimmten Apparaten**

(30) Priorität: 08.02.2002 DE 10205240
(71) Anmelder: Voith Paper Patent GmbH, 89522 Heidenheim (DE)
(72) Erfinder: Tichler, Geert, 8161 DX Epe (NL)

(57) **Zusammenfassung**

Das Verfahren dient dazu, verschleißbeanspruchte Gehäuseteile zu schützen. Dazu werden Verschleißteile (1) hergestellt, die vor dem Einbau in das Gehäuse mit einer aufgeschweißten Verschleißschicht versehen werden. Bevorzugt wird eine metallische Grundplatte (2) mit einer widerstandsfähigen Schweißschicht (3) versehen. Die Verschleißteile können auch lösbar im Gehäuse befestigt sein, so dass sie leicht auswechselbar sind. Eine typische Anwendung ist der Verschleißschutz von Apparaten zur Aufbereitung von verschmutzten Altpapiersuspensionen.

## Beschreibung

Die Erfindung betrifft ein Verfahren gemäß dem Oberbegriff des Anspruchs 1.

Die erwähnten Apparate werden bei der Aufbereitung von Altpapierstoff verwendet und sind insbesondere geschlossene Sekundärstofflöser, Grobsortierer oder Pulper-Ableerapparate. Solche Apparate werden mit einer nur wenig vorgereinigten Papierfaserstoffsuspension versorgt, die also noch relativ stark mit groben Fremdstoffen verunreinigt ist. Sekundärstofflöser haben die Aufgabe, den Auflösezustand der in der Suspension enthaltenen Papierbestandteile weiter zu erhöhen und/oder einen Teil der darin enthaltenen Störstoffe auszuscheiden. Dabei kann die Ausscheidung durch Nasssieben oder Zentrifugalkräfte oder durch beides erfolgen. Solche Apparate sind an sich bekannt und z.B. mit dem Namen FIBERIZER, CONTAMINEX oder TURBOSEPARATOR im Markt eingeführt. Charakteristische Bedingungen bei ihrem Betrieb sind die relativ hohe Strömungsgeschwindigkeit an den Behälterinnenwänden und Zentrifugalkräfte. Auf Grund der rauen Betriebsbedingungen sind die Gehäuseteile dieser Apparate trotz ihrer robusten Bauweise gelegentlich einem so hohen Verschleiß unterworfen, dass ein vorzeitiges Versagen des Apparates oder zumindest eine Beschädigung eintritt, was den Ersatz oder eine größere Reparatur erforderlich macht. Der Austausch des Apparates ist teuer, und eine Reparatur erfordert längere Stillstandszeiten, wodurch der Schaden zusätzlich zum eigentlichen Reparaturaufwand weiter erhöht wird.

So ist z.B. in der DE 23 45 735 A1 ein Sekundärstofflöser ("FIBERIZER") beschrieben, der zu dem eingangs angegebenen Zweck dient. Um das auch damals schon bekannte Problem des Gehäuseverschleißes zu lösen oder wenigstens zu vermindern, wurde u.a. eine konische Gehäuseform gewählt. Ein ähnlicher Sekundärstofflöser, der TURBOSEPARATOR, ist ebenfalls seit langem bekannt. Wie der Fachaufsatz Th. Bähr und W. Musselmann, "Voith-ATS-N-System, ein neuer Weg zur Aufbereitung und Sortierung von Altpapier", Wochenblatt für Papierfabrikation 20, 1975, dargelegt hat, ist bei dieser Maschine der Verschleiß durch eine aufwändige Basaltauskleidung reduziert worden.

Aus der US 4,278,534 ist es bekannt, einen verschleißgefährdeten Hydrozyklon mit einer zum Außengehäuse beabstandeten inneren Wand zu versehen, so dass ein Hohlraum zwischen dieser und dem Außengehäuse entsteht. Das soll die Betriebszeit verlängern, da auch nach verschleißbedingter Lochbildung in der inneren Wand nicht sofort eine Reparatur erforderlich wird. Diese Maßnahme erhöht also nicht primär die Verschleißfestigkeit, sondern schafft eine zusätzliche Sicherung gegen den Austritt von Flüssigkeit. Es kann nicht ausgeschlossen werden, dass die Funktion des Hydrozyklons nach der Lochbildung in der Innenwand entscheidend gestört wird.

Eine andere Doppelwandkonstruktion bei Hydrozyklonen ist aus der WO 98/18559 A1 bekannt. Dabei wird eine von vorneherein perforierte Innenwand verwendet, die in einem definierten Abstand zum Außengehäuse angeordnet ist. Die Perforation lässt die weichen Fasern passieren und weist harte Schwerteile ab. Dabei soll die Fasersuspension eine verschleißreduzierende Schutzschicht gegen die abrasiven Bestandteile bilden.

Der Erfindung liegt die Aufgabe zu Grunde, ein Verfahren zu schaffen, mit dem es gelingt, die Verschleißfestigkeit der Gehäuse bzw. Gehäuseteile ohne Beeinträchtigung der Funktion deutlich zu erhöhen und/oder im Reparaturfall eine wesentliche Verbesserung des Verschleißwiderstandes zu erreichen.

Diese Aufgabe wird durch die im Kennzeichen des Anspruchs 1 genannten Merkmale erfüllt.

Mit Hilfe des Verfahrens ist es möglich, eine verschleißfeste Aufpanzerung aller gefährdeten Stellen, auch wenn sie sehr großflächig sind, auf wirtschaftliche Weise zu erzeugen. Es ist zwar schon bekannt und mancherorts die übliche Praxis, verschleißbedingte Beschädigungen, insbesondere Löcher, in Kesselflicker-Manier wieder zu reparieren. Im Zuge solcher Maßnahmen werden Durchbrüche entweder direkt zugeschweißt oder mit aufgeschweißten Blechstücken abgedeckt. Es ist auch bekannt, Auswaschungen oder Ausschabungen mit einer Schweißnaht wieder aufzufüllen. Solche Reparaturen können jedoch das Problem nicht auf Dauer lösen und führen in vielen Fällen zu einer Beeinträchtigung der Apparate-Funktion, da die Strömung gestört wird, wodurch außerdem neue Verschleißnester entstehen. Eine ganzflächige manuelle Auftragsschweißung der Innenflächen eines solchen Gehäuses wäre zwar theoretisch durchzuführen, aber aus verständlichen Gründen ausgesprochen umständlich und zeitaufwändig.

Bei Anwendung des erfindungsgemäßen Verfahrens dagegen ist auch eine großflächige Abdeckung durch auftragsgeschweißtes, verschleißfestes Material mit vertretbarem Aufwand möglich, da dieser Arbeitsgang außerhalb des Gehäuses durchgeführt wird. Es können übliche, z.B. halbautomatische Schweißvorrichtungen verwendet werden. Um das Verschleißteil für gebogene Teile des Gehäuses geometrisch passend zu machen, kann es vorzugsweise nach der Auftragsschweißung in seiner Form entsprechend verändert werden. Um die Anbringung der Verschleißteile im Inneren eines Gehäuses, das z.B. zylindrisch oder kegelstumpfförmig ist, zu erleichtern, ist es auch vorteilhaft, mehrere Segmente herzustellen, die dann innerhalb des Gehäuses so zusammenzusetzen sind, dass sie den ganzen Umfang und die ganze Axiallänge des Gehäuses abdecken. Dabei kann die Innenfläche des Gehäuses als Kontaktfläche dienen, was die Montage erleichtert. Das Anbringen der auf diese Weise hergestellten Verschleißteile in den Apparat ist relativ schnell möglich, so dass er bald wieder betrieben werden kann.

Auch die Innenfläche von Gehäusedeckeln, z.B. Klappdeckeln lässt sich nach dem erfindungsgemäßen Verfahren schützen.

Für diesen Zweck geeignete Schweißmaterialien sind Chromstahl-Legierungen, die z.B. Wolframkarbid und/oder Niob enthalten. Sie lassen sich gut verarbeiten und haben einen sehr hohen Verschleißwiderstand.

Die Grundplatte kann aus einem korrosionsbeständigen Stahl bestehen, um das Auftreten von Korrosion gänzlich auszuschließen. Allerdings ist es auch möglich, einen billigeren Normalstahl zu verwenden, da die stoffberührten Flächen normalerweise vollständig durch die aufgeschweißte Schicht abgedeckt werden. Man kann auch die so nicht abgedeckten Flächen korrosionsbeständig machen, z.B. durch Plattieren.

Die Erfindung und ihre Vorteile werden beschrieben an Hand von Zeichnungen. Dabei zeigen:
- Fig. 1: ein zur Erfindung verwendbares Verschleißteil;
- Fig. 2a + 2b: Seitenansicht eines Verschleißteiles vor und nach dem Biegen;
- Fig. 3: einen nach dem Verfahren geschützten Apparat, einen sogenannten Sekundärstofflöser.

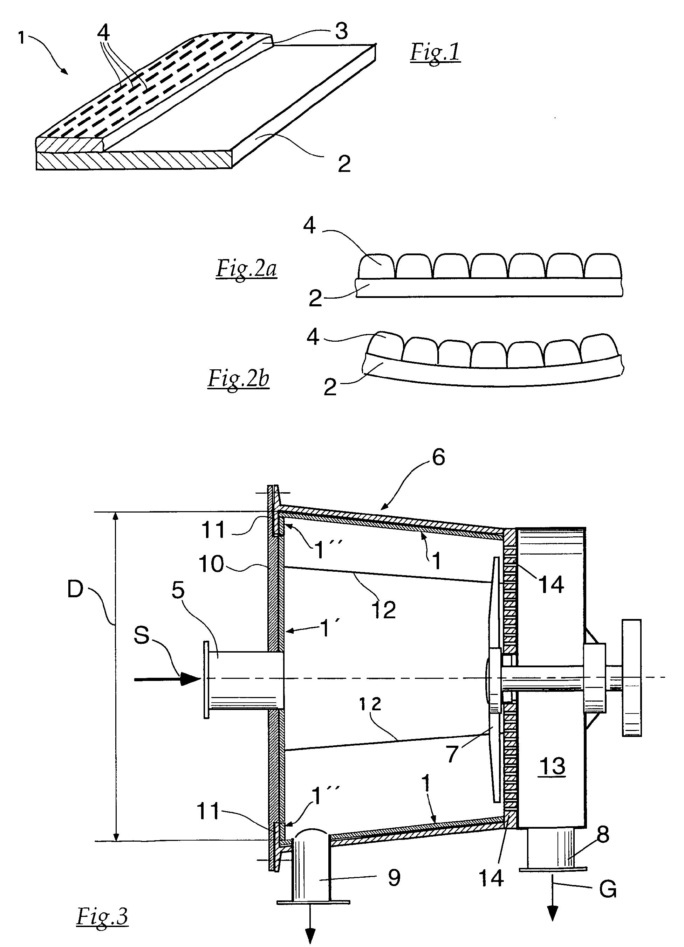

Fig. 1 zeigt den Teil einer Grundplatte, die zur Herstellung eines Verschleißteiles 1 verwendet wird. Man erkennt, dass auf einem Teil dieser Grundplatte 2 bereits eine Schweißschicht 3 aufgetragen ist. Wie bereits erwähnt, sind die Verfahren für Auftragsschweißungen bekannt, vorzugsweise wird man hier ein Pulver-Auftragsverfahren verwenden, bei dem also die Legierung, die die Grundplatte 2 panzern soll, in einem solchen Pulver enthalten ist und beim Schweißen mit der Grundplatte 2 verschmolzen wird. Der Vorteil dieses Verfahrens ist, dass es sich automatisieren lässt, da das Verschleißteil außerhalb des Gehäuses hergestellt wird, in das es später eingesetzt werden soll. Der eigentliche Schweißvorgang kann mit Vorteil an einer ebenen Grundplatte 2 vorgenommen werden, die erst danach durch Biegen oder Walzen in die benötigte Form gebracht wird. Dabei werden die Schweißraupen 4 mit Vorteil so gelegt, dass ihre Längenerstreckung parallel zur Achse der späteren Biegeoder Walzbewegung liegt. Das Umformen zeigen die Figuren 2a und 2b schematisch. Gemäß Fig. 2a können die Schweißraupen 4 so auf der Grundplatte 2 aufgetragen werden, dass seitlich genügend Platz zur Nachbarraupe bleibt. Beim Biegen oder Walzen (Fig. 2b) werden die Zwischenräume enger oder verschwinden. Die Schweißschicht wird nur minimal beansprucht, da die Schweißraupen selbst kaum gebogen werden müssen. Es entsteht eine relativ geschlossene widerstandsfähige Verschleißschutzschicht.

Ein wichtiges Beispiel für die Anwendung des Verfahrens ist in Fig. 3 in Form eines Sekundärstofflösers, auch Fiberizer genannt, dargestellt. Ein solcher Sekundärstofflöser nimmt bei seiner normalen Verwendung die stark verschmutzte Altpapiersuspension auf, wie sie z.B. direkt aus dem Stofflöser kommt. Diese Suspension S wird über einen hier zentral angeordneten Einlaufstutzen 5 in das Innere des Gehäuses 6 eingeführt. Der Rotor 7 erzeugt eine relativ starke Umfangsgeschwindigkeit der Suspension und hält das Sieb 14 von Verstopfungen frei. Ein großer Teil der zugeführten Suspension kann das Sieb 14 passieren, in den Gutstoffraum 13 gelangen und dann als Gutstoff G den Apparat durch den Gutstoffstutzen 8 verlassen. Die zurückgehaltenen Störstoffe verbleiben in dem Gehäuse 6 so lange, bis sie durch den Rejektstutzen 9 herausgeführt werden. Wie bereits erwähnt, könnte je nach Menge und Härte der im Gehäuse rotierenden Störstoffe (Steine, Metallstücke, Glasscherben) ein unzulässig hoher Verschleiß auftreten. Um das zu verhindern, ist das Gehäuse großflächig und vorzugsweise zu mindestens 90 % der mit der stark verunreinigten Suspension in Berührung kommenden Innenfläche ausgekleidet. Bei dieser Angabe wird auch die Innenseite des Deckels, nicht jedoch die Fläche des Siebes 14 und des Gutstoffraums 13 berücksichtigt. Die zur Auskleidung verwendeten Verschleißteile 1, 1' bzw. 1'' sind geschnitten gezeichnet, ohne dass Grundplatte 2 und Schweißschicht 3 einzeln erkennbar sind. Bei dem gezeigten Beispiel ist der Apparat mit einem Deckel 10 ausgestattet, der nicht die gesamte Stirnfläche des Gehäuses abschließt, sondern, da das Gehäuse dort mit einem Kragen 11 versehen ist, einen entsprechend kleineren Teil der Stirnfläche. Diese Konstruktion bringt gewisse Vorteile, erfordert aber bei Durchführung des hier beschriebenen Verfahrens, dass die Verschleißteile, die die Innenwand des Gehäuses schützen sollen, nicht komplett, sondern in Teilen oder Sektoren eingesetzt werden müssen. Sie können dann allerdings leicht in das Gehäuse eingeschweißt werden, so dass sich letzten Endes eine über den ganzen Umfang erstreckende Auskleidung herstellen lässt. An den Trennfugen 12 der Sektoren kann dabei eine Schweißnaht gelegt werden, die etwa die Höhe der Grundpatte 2 und der Schweißschicht 3, zusammen genommen, hat. In anderen Fällen könnte gerade bei einem Gehäuse mit einem die ganze Stirnfläche abschließenden Deckel auch das Verschleißteil als kompletter Kegelstumpf oder Zylinder hergestellt und axial eingeschoben werden. Voraussetzung wäre, dass ein solch großes Verschleißteil noch zu handhaben ist. Die der Suspension zugewandte Innenseite des Deckels 10 ist mit einem Verschleißteil 1' versehen, das die Form einer ebenen Scheibe mit zentraler Öffnung für den Einlaufstutzen 5 hat. Die Verschleißteile 1'' für die Innenseite des Kragens 11 bestehen aus ebenen Ringsegmenten.

Das Beispiel Fig. 3 zeigt nur eine mögliche, wenn auch typische Anwendung des erfindungsgemäßen Verfahrens. Sekundärstofflöser oder ähnliche für den Einsatz in Papierfabriken bestimmte Apparate haben in der Regel relativ große Abmessungen. Der größte Innendurchmesser D des Gehäuses liegt dabei oft zwischen 1,2 und 3 m. Um die großen Flächen solcher Apparate zu schützen, ist das erfindungsgemäße Verfahren besonders wirtschaftlich.

Üblicherweise wird man den bei der Anwendung des Verfahrens zweifellos erforderlichen Aufwand abwägen müssen gegen die Vorteile, die sich durch diesen Verschleißschutz ergeben. Man kann aber davon ausgehen, dass zumindest dann, wenn sich im Betrieb eines solchen Apparates ein sehr starker Verschleiß gezeigt hat, also eine Reparatur oder ein Tausch des Apparates erforderlich ist, das Verfahren sich als die ökonomisch beste Lösung erweisen wird.

## Patentansprüche

1. Verfahren zur Erhöhung des Verschleißwiderstandes von Gehäuseteilen von Apparaten , die zur Aufbereitung von mit groben Fremdstoffen verunreinigten Altpapiersuspensionen bestimmt sind,
**dadurch gekennzeichnet,**
**dass** mindestens ein flächenhaftes Verschleißteil (1, 1', 1'') hergestellt wird, indem auf eine metallische Grundplatte (2) eine Schweißschicht (3) aus einem hochverschleißfesten aufschweißbaren Material aufgetragen wird,
die eine Fläche dieser Grundplatte vollständig oder nahezu bedeckt und
**dass** dieses Verschleißteil (1, 1', 1'') so geformt ist oder so geformt wird, dass es an die vorgesehene Stelle im Gehäuse (6) des Apparates hineinpasst und
**dass** das Verschleißteil (1, 1', 1") im Gehäuse (6) befestigt wird.

2. Verfahren nach Anspruch 1,
**dadurch gekennzeichnet,**
**dass** die im Gehäuse (6) befestigten Verschleißteile (1, 1', 1'') mindestens 90 % der Gehäuseinnenfläche bedecken, die bei Betrieb des Apparates von der mit groben Fremdstoffen verunreinigten Altpapiersuspension berührt werden.

3. Verfahren nach Anspruch 1 oder 2,
**dadurch gekennzeichnet,**
**dass** zylindrische oder konische Teile des Gehäuses (6) mit mehreren Verschleißteilen (1) versehen werden, welche als Sektoren hergestellt und dann im Gehäuse (6) zusammengesetzt werden.

4. Verfahren nach Anspruch 1 oder 2,
**dadurch gekennzeichnet,**
**dass** ein konisches Gehäuse mit einem konischen Verschleißteil versehen wird, welches zunächst als Ganzes hergestellt wird und dann in das Gehäuse von der Seite mit dem größeren Durchmesser aus eingesetzt wird.

5. Verfahren nach einem der voranstehenden Ansprüche,
**dadurch gekennzeichnet,**
**dass** als Schweißschicht (3) eine Metalllegierung verwendet wird, deren Eigenschaften durch die Komponenten Kohlenstoff, Chrom und Niob bestimmt wird.

6. Verfahren nach einem der voranstehenden Ansprüche,
**dadurch gekennzeichnet,**
**dass** die Schweißschicht (3) im Pulver-Schweißverfahren aufgebracht wird.

7. Verfahren nach einem der voranstehenden Ansprüche,
**dadurch gekennzeichnet,**
**dass** die Grundplatte (2) beim Aufschweißen eben ist und danach durch Biegen oder Walzen an die Gehäuseform angepasst wird.

8. Verfahren nach Anspruch 7,
**dadurch gekennzeichnet,**
**dass** die Schweißraupen (4) der Schweißschicht (3) so gelegt werden, dass die Achse der Biege- oder Walzbewegung quer zur Längenerstreckung der Schweißraupen (4) liegt.

9. Verfahren nach einem der voranstehenden Ansprüche,
**dadurch gekennzeichnet,**
**dass** eine Schweißschicht mit einer Dicke von mindestens 2 mm, vorzugsweise ca. 4 mm, aufgetragen wird.

10. Verfahren nach einem der voranstehenden Ansprüche,
**dadurch gekennzeichnet,**
**dass** die Verschleißteile (1, 1', 1'') bündig mit der Innenwand des Gehäuses (6) eingesetzt werden.

11. Verfahren nach einem der voranstehenden Ansprüche,
**dadurch gekennzeichnet,**
**dass** die Verschleißteile (1, 1', 1'') in das Gehäuse (6) eingeschweißt werden.

12. Verfahren nach einem der Ansprüche 1 bis 10,
**dadurch gekennzeichnet,**
**dass** die Verschleißteile (1, 1', 1'') im Gehäuse (6) lösbar befestigt werden.

13. Verfahren nach Anspruch 12,
**dadurch gekennzeichnet,**
**dass** die lösbare Befestigung eine Schraubverbindung ist.

14. Verfahren nach einem der voranstehenden Ansprüche,
**dadurch gekennzeichnet,**
**dass** Verschleißteile (1, 1', 1'') miteinander durch Formschluss verbunden werden.

15. Verfahren nach einem der voranstehenden Ansprüche,
**dadurch gekennzeichnet,**
**dass** die Grundplatte (2) aus nicht rostfreiem Stahl hergestellt wird und dass die nicht von der Schweißsicht (3) verdeckten Flächen mit einer korrosionsbeständigen Stahllegierung beschichtet werden.

16. Verfahren nach einem der voranstehenden Ansprüche,
**dadurch gekennzeichnet,**
**dass** das Verfahren durchgeführt wird, erst nachdem an diesem Gehäuse ein betriebsschädlicher Verschleiß oder eine verschleißbedingte Beschädigung aufgetreten ist.

17. Verfahren nach einem der voranstehenden Ansprüche,
**dadurch gekennzeichnet,**
**dass** das Verfahren an Apparaten durchgeführt wird, deren größter innerer Gehäusedurchmesser (D) mindestens 1,2 m beträgt.

18. Verfahren nach einem der voranstehenden Ansprüche,
**dadurch gekennzeichnet,**
**dass** das Verfahren an Apparaten durchgeführt wird, die mit mindestens einem Sieb (14) versehen sind, durch das ein Gutstoff (G) abgezogen werden kann.
